# EUROPEAN PATENT SPECIFICATION

(11) **EP 4 227 820 B1**
(45) Date of publication and mention of the grant of the patent: **10.12.2025**
(21) Application number: 22156109.5
(22) Date of filing: 10.02.2022
(51) Int. Cl.: G06F 16/182, H04L 9/40

(54) **SYSTEM FOR MANAGING DATA**
SYSTEM ZUR DATENVERWALTUNG
SYSTÈME DE GESTION DE DONNÉES

(43) Date of publication of application: 16.08.2023
(73) Proprietor: Deutsche Telekom AG, 53113 Bonn (DE)
(72) Inventor: Rollin, Hannes, 19055 Schwerin (DE)
(74) Representative: Braun-Dullaeus Pannen Emmerling Patent- & Rechtsanwaltspartnerschaft mbB

(56) References cited:
- US-A1- 2012 330 887
- US-A1- 2019 230 092
- FARMER CARSON ET AL: "Decentralized identifiers for peer-to-peer service discovery", 2021 IFIP NETWORKING CONFERENCE (IFIP NETWORKING), IFIP, 21 June 2021 (2021-06-21), pages 1 - 6, XP033938934, [retrieved on 20210701], DOI: 10.23919/IFIPNETWORKING52078.2021.9472201

## Description

### TECHNICAL FIELD

The present invention relates to a system for managing data, in particular for managing open data for a data space.

### BACKGROUND

The EU Open Data Directive (ODD) mandates that all non-secret, non-personal data collected by government institutions is supposed to be provided to the public free of charge and hassle-free. Data shall be open by design and by default. However, it is not enough that data is published somewhere somehow. Data must be discoverable, understandable, and consumable. These three requirements give rise to the data space concept, which rests on the three pillars of a unified catalogue (for realizing discoverability), a vocabulary (also called semantics, schema, or ontology, for realizing understandability), and a unified interface structure (also referred to as interoperability, for realizing consumability).

A fully functional EU-wide data space for open data is therefore desired. Many data-centric initiatives for publishing open data exist, but they are domain-restricted, require manual catalogue maintenance, manual data asset registration, central components for data exchange facilitation and access management, or all of the above. In addition to these problems, many data providers do not have sufficiently trained IT personnel to rapidly and adequately package, annotate, and publish newly acquired open data assets. These challenges call for a new solution. While many domain-specific and general vocabularies have been designed and are practically ready to use, there's no unified catalogue and data space interface structure yet.

As a sovereign system of data sharing, International Data Spaces (IDS) has made contributions, including an exhausting reference architecture and some prototypical implementations. But the IDS architecture is built upon outdated thinking using centralized identity and access management, a central metadata broker, and a central vocabulary provider. This centralized approach is fraught with difficulties when faced with a cross-company, cross-government international data space, giving rise to a lengthy rulebook and a newly inaugurated but yet idle "operating company". Because no subset of prospective data providers would willingly take on the burden of hosting, maintaining, and being held responsible for the central components.

The other enthusiastically conceived but increasingly suspiciously eyed IT ecosystem initiative is the Gaia-X project. The Gaia-X establishes an ecosystem in which data is made available, collated and shared in a trustworthy environment. The Gaia-X aims higher than IDS in wanting to provide not just a data space but, moreover, a meta-cloud of EU infrastructure and platform providers. But the original great ambitions have been watered down in the past few years so that future "federations" (a concrete, self-governed instances of Gaia-X) are required to independently anoint "federators" that host, maintain, and are held responsible for the GAIA-X federation services. Essentially a small number of central services responsible for the proper functioning of a GAIA-X federation.

US 2019/230092 A1 describes a system for managing decentralised identifiers (DIDs) for entities such as data providers and consumers, including storage of DID documents either centrally or on clients, and retrieval of such documents when needed. The system may use a cloud-based "ID hub" or similar registry, but focuses on individual DID resolution and authentication rather than automated, complete metadata synchronisation or governance-based onboarding.

US 2012/330887 A1 relates to peer-to-peer data sharing systems in which metadata or indexes can be distributed among participating nodes for faster access to shared resources. It focuses on the trade-offs between centralised and distributed metadata storage, without disclosing governance structures, verifiable credentials, or blockchain-based DID management for a regulated data space.

Therefore, there is a need for a fully decentralized data space for open data.

### SUMMARY

An object of the present invention is to provide a system for managing data, e.g., for managing data for a data space, which enables automatic registration, discovering or management of data asset (e.g., open data) in a fully decentralized and self-sovereign data space.

This object is solved by the subject matter of the independent claims. Advantageous embodiments of the invention are subject matter of the dependent claims.

The features of the various aspects of the invention described below or the various examples of implementation may be combined with each other, unless this is explicitly excluded or is technically impossible.

### BRIEF DESCRIPTION OF THE DRAWINGS

In the following, preferred implementation examples of the present invention are explained with reference to the accompanying Fig.:
- Fig. 1:: shows a diagram of a self-sovereign identity (SSI) system;
- Fig. 2:: shows a diagram of a system for managing data in accordance with an embodiment of the present invention;
- Fig. 3:: shows an example of service endpoints in accordance with an embodiment of the present invention;
- Fig. 4:: shows a diagram of a data space in accordance with an embodiment of the present invention;
- Fig. 5:: shows an example of reviewing a data asset in accordance with an embodiment of the present invention.

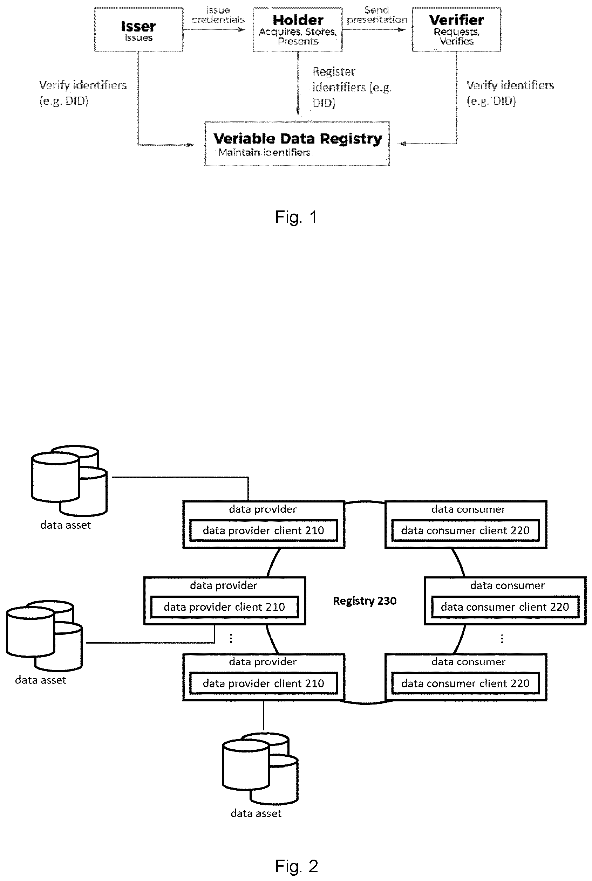

The technology of self-sovereign identity (SSI) has been brought up recently for providing a safer and more democratic internet. SSI shifts control of digital identity from large-scale (third party) "identity providers" to individual users. SSI is a decentralized, user-centric technology for adding an identity layer to the internet. SSI has initially been conceived as a framework for issuing, holding, and verifying digital identities/credentials, so that a verifier trusts the cryptographic proof of the credentials presented by a holder without having to contact the issuer. As shown in Fig. 1, an issuer issues one or more verifiable credentials (VCs) to a holder, a holder can present one or more of its verifiable credentials to a verifier, and a verifier can verifier the authenticity of the presented verifiable credentials with a registry.

In the present invention, the SSI technology is applied in a data space (also called dataspace) where auto-authentication, auto-authorization, and secure communication can be realized. The data space can be fully decentralized and also has data discoverability and interoperability. The data space may comprise a system for managing data (e.g., open data).

Embodiments of the present invention also provides a system for managing data, in particular, the system is suitable for managing open data for the data space mentioned before. The system comprises one or more computer-implemented data provider clients, one or more computer-implemented data consumer clients, and a registry including multiple registry nodes.

Open data hereby is data released under an open license, which does not impede its reuse for free. Linked data is structured data which is interlinked with other data so it becomes more useful through semantic queries. Linked data may also be open data, in which case it called Linked Open Data (LOD). LOD is Linked Data which is released under an open license, which does not impede its reuse for free. LOD can be identified by a Uniform Resource Identifier (URI) and can be accessed directly via HTTP.

Unlike data warehouse or a data lake, data in a data space is not moved somewhere for temporary storage, but remains with data provider unless it is explicitly downloaded or otherwise transmitted.

Before discussing the various embodiments of the invention in further detail below, the following paragraphs will give a brief overview on the meaning of several terms frequently used herein and their interrelation and dependencies.

Within the context of the present invention, data asset can refer to open data such as LOD. In some examples, data assert can also refer to data which is not open data. A data asset can be for example any immutable collection of data points, e.g., a text file, a database, an image, etc. A date asset can also be referred to data artefact, such as a database, a document, a video, a picture, a presentation, an email, a website, etc., that carry data.

A decentralized identifier (DID) is a globally unique identifier that does not require a centralized registration authority and is often generated and/or registered cryptographically. It is an identifier that enables verifiable, decentralized digital identity. More specifically, a DID is a Uniform Resource Identifier (URI) that associates a DID subject with a DID document allowing trustable interactions associated with that DID subject. An example of DID is did:load:123abc, which is a globally unique identifier with a specific colon-separated syntax preceded by "did".

A DID document contains information associated with a DID. It typically expresses a verification method, including a cryptographic public key, and one or more services relevant to interactions with the DID subject, such as a service endpoint. There is a one-to-one relationship between DIDs and DID documents. A DID can be resolved to a DID document (that is, the DID document associated with the DID) by using a resolver, e.g., a DID resolver.

A DID subject can be any subject such as an organization, a person, a data model, an abstract entity, a data provider etc. as determined by the controller of the DID (DID controller). A DID controller is an entity that has the capability to make changes to a DID document. A DID might have more than one DID controller.

A service endpoint is a network address, such as an HTTP URL, at which services operate on behalf of a DID subject. Services are means of communicating or interacting with the DID subject or associated entities via one or more service endpoints. Examples include discovery services, agent services, social networking services, file storage services, verifiable credential repository services, registration, or downloading.

A verifiable credential (VC) is a tamper-evident credential that has authorship that can be cryptographically verified. Verifiable credentials can be used to build verifiable presentations, which can also be cryptographically verified.

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

In one embodiment, a system for managing data is provided. The system comprises one or more computer-implemented data provider clients 210, one or more computer-implemented data consumer clients 220, and a registry 230 including multiple registry nodes. In an example, the system can be shown in Fig. 2. The system can be for example used for managing open data for a data space.

A data provider is a core participant publishing data assets (e.g., open data) for being retrieved or subscribed to by one or more data consumers. Each data provider is configured with a computer-implemented client 210 (hereinafter data provider client) via which the communication or interaction with a third party, e.g., data consumer or registry 230, can be realized. Each data consumer is also configured with a computer-implemented client 220 (hereinafter data consumer client) via which the communication or interaction with a third party, e.g., data provider or data asset, can be realized.

Each data provider client 210 and/or each data consumer client 220 can be for example a software. Advantageously, it is implemented by self-sovereign identity (SSI) wallet which is a digital identity wallet based on self-sovereign identity principle. The use of data consumer client 220 implemented by SSI wallet enables a data consumer to establish relationships and interact with third parties such as a data provider in a trusted manner. The use of data provider client 210 implemented by SSI wallet enables a data provider to establish relationships and interact with third parties such as a data consumer in a trusted manner. It can also be used to deal with verifiable credential (e.g., public key) management.

Each data provider is issued with a decentralized identifier (DID) and an DID document associated with its DID. Each data provider client 210 for a specific data provider is configured to register a DID of the (specific) data provider and the DID document of the (specific) data provider in the registry 230. By doing this, the DID documents can be published in the registry 230. In an example, the DID and the DID document of the (specific) data provider is issued or generated by the data provider client 210 of the (specific) data provider. The DID document of the (specific) data provider comprises a public key of the (specific) data provider, and a service endpoint for retrieving metadata of a data asset of the (specific) data provider. Advantageously, the service endpoint in the DID document is used for retrieving metadata of each data asset of the (specific) data provider. The metadata can be for example used to correctly interpret the data in the data asset. Each data asset may have a set of structured metadata. For example, the metadata of EU geodata is usually structured according to StatDCAT-AP.

The public key of the (specific) data provider can be for example used by a third party to encrypt a communication with the data provider client 210 of the (specific) data provider, the data provider client 210 of the (specific) data provider has a private key of the (specific) data provider, and the encrypted communication can be decrypt only by using the private key, thereby secure communication is achieved. In another example, any verifiable credential (VC) issued by the data provider client 210 of the (specific) data provider is cryptographically signed with the public key of the (specific) data provider.

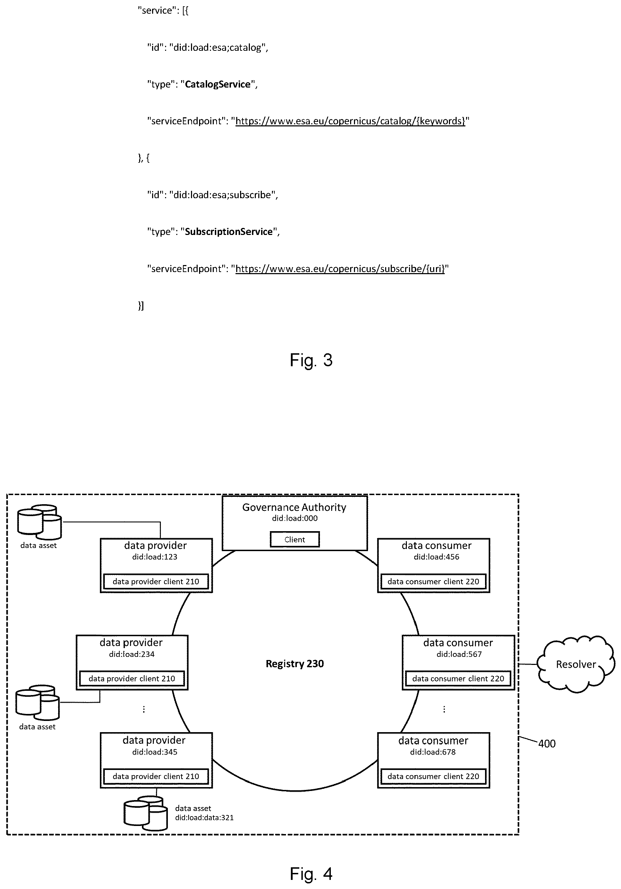

An example of service endpoint included in DID document can be shown in Figure 3, the DID document of the data provider comprises a service endpoint called Catalog Service Endpoint for downloading metadata of a data asset of the data provider by keyword and a service endpoint called Subscription Service Endpoint which enables or disables a notification about data asset publication.

Each data consumer client 220 comprises a metadata crawler configured to obtain or update a list of DIDs and/or DID documents of all data providers which are registered in the registry 230. In some examples, when the system is used for managing data for a data space, the updating a list of DIDs of data providers which are registered can be performed by checking a DID document of the data space, wherein the DID document of the data space comprises a list of DIDs of data providers which are registered.

Additionally, metadata crawler is further configured to build or update a local catalogue, the local catalogue comprises one or more of the following information: a database comprising all available metadata of all data assets of all data providers, a hierarchical search tree (also called a category tree) of all data assets of all data providers, an inverted index based on keywords, and filtered metadata which is filtered from all available metadata of all data assets of all data providers according to a requirement of a data consumer. Optionally, a data provider client 210 (e.g., a service-oriented data provider) or a client used by a governance authority, also comprises the metadata crawler mentioned above, which can be used to build up and maintain a catalogue (e.g., catalogue tree) of all available data assets, the catalogue can be a browsable web catalogue.

In another embodiment, a data space is provided. The system for managing data according to any one of the embodiments mentioned before can be used to form the data space. In other words, the data space comprises the one or more computer-implemented data provider clients 210, the one or more computer-implemented data consumer clients 220, and the registry 230 with multiple registry nodes. An example of such data space can be shown in figure 4, reference number 400 represents a data space.

In the data space 400, each onboarding data provider (that is, data provider being granted access to the data space) is issued with a verifiable credential (VC), containing a proof method. The verifiable credential of each onboarding data provider has a "role" attribute, so it can be also named as a cryptographically verifiable role credential. The cryptographically verifiable role credential can for example be issued by a governance authority via a client (e.g., a software). An example of "role" attribute is an issuer which issues a verifiable credential (VC) to a holder, or a holder which presents one or more of its verifiable credentials to a verifier, or a verifier which verifiers the authenticity of the presented verifiable credentials. Each onboarding data provider can present its verifiable credential to a data consumer via data provider client 210. In this respect, each onboarding data provider acts as the role "holder", and the data consumer act as the role "verifier". Optionally, when an onboarding data provider intends to communication with a third party (e.g., data provider or data asset) via its data provider client 210, the cryptographically verifiable role credential of the onboarding data provider might be requested to establish a session (e.g., DIDComm Messaging) for communication.

The registry 230 is configured to store DID documents, e.g., DID documents of data providers or DID documents of data consumers. The registry 230 with multiple registry nodes is a decentralized registry where each onboarded data provider needs to host a registry node of the one or more registry nodes. Each of the one or more registry nodes contains the whole registry information of the registry 230.

In some examples, the registry 230 with multiple registry nodes is implemented by blockchain, such as Hyperledger Indy or Veres One. This has the advantage that not all registry nodes in the blockchain need to be online at once, which makes it a decentralized storage which is particularly robust. In addition, the use of blockchain also makes the registry 230 a trustworthy form of storage, where trust is derived from a majority vote of registered data providers-even if one or two data providers are compromised, the registry 230 remains functional. Additionally, due to the decentralized nature of blockchains, there is no central storage facility. This requires a significant number of participants, e.g., some or all of data providers and some or all of big data consumers, host a blockchain node. Therefore, each onboarded data provider is configured to host one or more registry nodes (e.g., one or more block chain nodes).

In this embodiment, even if there are several thousand of (onboarded or registered) data providers, both the size of the registry 230 and the size of the list of all DIDs of all (onboarded or registered) data providers are comparably small. For example, when there are ten thousand data providers registered in the registry 230 implemented by blockchain, and the DID of each data provider is 128 Byte, the total size of the registry 230 is about one MB, which is smaller than the size of registry 230 implemented by the Bitcoin network.

In some examples of this embodiment, the data space 400 itself, each data provider in the data space 400, each of all or some data consumers, or each of all or some data assets are issued with a DID and a DID document including one or more public keys and one or more service endpoints. The one or more public keys are examples of verifiable credentials and can be used for verification and secure communication.

Optionally, a DID document issued to the data space itself comprises a service endpoint (which is a network address) linked to a machine-readable website which contains a list of all DIDs of all (onboarded or registered) data providers. In this way, the DID document of the data space can point to all onboarded or registered data providers. Each data consumer can easily discover the data providers of the data space.

Optionally, a DID document of a data provider can be created bya data provider client 210 of the data provider. A DID document of a data provider comprises one or more of the following service endpoints: a service endpoint for downloading all metadata of all data assets of the data provider, a service endpoint for downloading filtered metadata of all data assets of the data provider, and a service endpoint for data asset consumption, wherein the data asset consumption may include directly downloading a data asset of the data provider by calling a URL, subscription of a data asset of the data provider, or streaming a data asset of the data provider. A service endpoint can be for example a Uniform Resource Identifier (URI) or a Uniform Resource Locator (URL).

Alternatively, or additionally, a DID document of a data provider comprises a service endpoint through which information about the data provider can be obtained. The information about the data provider can be standardized information according a rule or a standard adopted by governance authority, it can comprise information such as its name, legal name, legal form, public website, status, and so on. Advantageously, the information about the data provider is encapsuled in a VC, e.g. a VC issued by a governance authority or a cryptographically verifiable role credential issued to the data provider. By doing this, the information about the data provider become tamper-resistant and cryptographically verifiable.

In some examples, a data asset is issued with a DID and a DID document associated with the DID. The DID document of the data asset may comprises a service endpoint via which data in the data asset, a sample of the data asset and/or a metadata of the data asset is obtained. This has the advantage that a data asset can be published or announced by publishing the DID of the data asset to the registry 230 (e.g., via a data provider client 210) or by publishing a QR code of the data asset which containing the DID of the data asset. The data asset can also be quickly retracted by revocation a list of DIDs of the data asset in the registry, e.g., based on the SSI revocation mechanism.

Advantageously, when the data space is a small data space with at most a few thousand data assets, each of all the data assets of the data space is issued with a DID and a DID document, the DIDs and/or the DID documents of all the data assets are registered in the registry 230. When the data space is a larger data space, only DIDs (and/or DID documents) of some (specific) of the data assets of the data space are registered in the registry 230. This avoids the bloating of the registry and the corresponding performance decline.

In some examples, for a data asset which are not issued with a DID, the revocation of such a data asset can be done by removing the corresponding service endpoint for retrieving metadata of the data asset from the DID document.

### Publishing or announcing a data asset

In some examples, each data provider client 210 can enable a data provider to publish, announce or register a new data asset in the data space 400. When a data provider has a new data asset, the new data asset can be published, announced or registered by one or more of the following ways.

In a first way of publishing data asset, when a data provider has a new data asset (that is, a data asset has not been published or registered in the data space), a data provider client 210 of the data provider is configured to 1) provide a service endpoint for the new data asset via which data in the new data asset or metadata of the new data asset is obtained, 2) generate a DID and a DID document for the new data asset, wherein the DID document of the new data asset comprises the service endpoint for obtaining data in the new data asset or metadata of the new data asset, and 3) register the DID and the DID document of the new data asset in the registry 230. Optionally, the data provider client is further configured to notify the publication of the new data asset to one or more data consumer clients 220 (e.g., to a data consumer who subscribes this kind of notification service).

In a second way of publishing data asset, when a data provider has a new data asset, a data provider client 210 of the data provider is configured to generate a service endpoint (e.g. URL or URI) for obtaining data in the new data asset or metadata of the new data asset, and adding the service endpoint (e.g. URL or URI) for obtaining data in the new data asset or metadata of the new data asse into the DID document of the data provider. Advantageously, the metadata crawler of each data consumer client 220 is configured to discover the change of the DID document of the data provider, obtain the service endpoint for obtaining data in the new data asset or metadata of the new data asset, and update its local catalogue based on the service endpoint for obtaining data in the new data asset or metadata of the new data asset. In this way, the new data asset can be published without actively informing any third party.

Advantageously, the data provider client 210 of the data provider is further configured to add the metadata of the new data asset to its local catalogue or add data in the new data asset to its local catalogue; wherein the local catalogue of the at least one data provider client in the one or more data provider clients comprises one or more of the following information: a database comprising all available metadata of all data assets of the data provider, a category tree of all data assets of the data provider, an inverted index based on keyword, and filtered metadata which is filtered from all available metadata of all data assets of the data provider.

Optionally, a data consumer can access a data asset of a data provider via one or more of the following ways.

A data consumer client 220 of the data consumer receives a notification from a data provider client 210 regarding publication of a data asset, the notification comprises a DID of the data asset. The data consumer client 220 can access or obtain data in the data asset or metadata of the data asset based on the DID of the data asset.

In a second way, a data consumer client 220 comprises a local catalogue, the local catalogue comprises one or more of the following information: a database comprising all available metadata of all data providers, a hierarchical search tree (also call a category tree) of all available data assets in the data space, an inverted index based on keyword, and a filtered metadata according to a requirement of a data consumer. The data consumer client 220 searches its local catalogue (e.g., database) to access metadata of the data asset.

In a third way, a data consumer client 220 is configured to scan a QR code to obtain a DID of the data asset.

In this embodiment, a DID can be resolved to a DID document by a resolver (e.g., DID resolver). The resolver may be hosted by a governance authority of the data space. Advantageously, the resolver is in cloud and spread across different regions or availability zones. An example of the resolver is a universal resolver which resolves decentralized identifiers (DIDs) across many different DID methods based on the W3C DID Core 1.0 and DID Resolution specifications.

The data space 400 can be used for linked open data (LOD). This means that at least some of data assets of data providers comprise linked open data. Therefore, in the following, as an example, the data space is named as linked open access data space (LOAD). In one example, one data space LOAD is configured for EU or several data spaces LOAD are configured for different domains of EU, each of data space is configured with a decentralized identifier and an associated DID document.

Optionally, in case of accessing a data asset which is open data, data consumers might not need any kind of authentication and authorization. For secure communication, a peer DID and a DID document with a freshly made public key (which is a temporary public key) can be created by a data provider client 210 for the data asset. The peer DID maybe only used once and does not need to be registered. In this case, it is also called throwaway DID.

Optionally, each data consumer is issued with a base ID credential (which can be a digital passport), e.g., by a government agency or by an organization. The base ID credential can be for example used to prove nationality. This is even possible without revealing other identity attributes except nationality. This enables that some open data can be only accessed by certain citizenship. In an example, EU citizenship maybe formally required for obtaining/accessing EU open data. To implement this, each data consumer client 220 is configured to store the base ID credential. When it is intended to access or obtain data (open data) in the data asset, each data consumer client 220 is requested to provide the base ID credential.

In some examples of the embodiment, a governance authority is provided for the data space for providing onboarding, i.e., what to do to be granted access to the data space as a data provider or data user/data consumer. Only trustworthy data providers and/or data consumers are being onboarded. Governance authority can be an organization endeavor, e.g., EU institution, a dedicated NGO, or some other generally trusted organization. The governance authority can for example use a client (e.g., a software) to interreact with third parties (e.g., a data provider or a data consumer) in the data space. The governance authority, as a primary or even sole issuer of role credentials, acts as a "door steward" of the data space. Alternatively or additionally, DID registration can be exclusively realized by a client used by the governance authority.

In addition to provider onboarding, the governance authority can publish and maintain a governance framework which defines a (binding) set of terms, conditions, rights, duties, admissible protocols, algorithms, credential types, or standards to be used within the data space for formal data management, ensuring quality and trust throughout the data space. For example, the governance authority and the governance framework can act as axiomatic trust anchor of the data space. The cryptographic trust of credential verification is built upon human trust in the governance authority.

In some examples, the governance authority is also issued with a DID and a DID document.

In some examples, a data provider or a data consumer that has been fallen into disgrace can be expelled by the governance authority by revoking its verifiable credential (e.g., its cryptographically verifiable role credential) via the client of the governance authority.

In some examples of the embodiment, potential threat vectors are considered. With this regard, there are unregistered data consumer and registered data consumer. A maximum download rate or a maximum download count is configured for unregistered data consumers. For registered data consumers, in particular important data consumers such as a large-scale consumer, a maximum download rate higher than the maximum download rate of the unregistered data consumer or a maximum download count higher than that of the unregistered data consumer is configured. This can be done during the onboarding process where a cryptographically verifiable role credential is issued to a data consumer and maximum download rate or a maximum download count is configured to the data consumer. The data consumer client 220 of the data consumer is capable of checking the cryptographically verifiable role credential to determine whether the data consumer is a registered data consumer or not. If the data consumer is an unregistered data consumer, the data consumer client 220 is configured to adjust its download rate or its download count to not exceed corresponding maximum download rate of the unregistered data consumer or a maximum download count of the unregistered data consumer.

In some examples of the embodiment, the dataspace supports data consumer membership fees. In this regard, a paying data consumer, which is a specific data consumer, is issued, e.g., by the governance authority, with a membership credential. The membership credential is a VC. A data consumer client 220 of the paying data consumer can hold this membership credential and present it to a data provider client 210 of a data provider to obtain corresponding paying service.

Yet in another example of the embodiment, a data asset which is not open data anymore (hereinafter non-open data asset) can be sold at a price. This means that only a specific data consumer which successful purchase the non-open data asset can have access to the non-open data. To implement this, a data provider of the non-open data asset issues a VC that indicates successful purchase of the non-open data asset to a paying data consumer via a data provider client 210. The data provider client 210 is configured to only allow a data consumer which present the VC indicating successful purchase of the non-open data asset to access the non-open data asset. In contrast to passwords, PINs or tokens, such a VC cannot be stolen and much safer.

In this embodiment, the data space is fully decentralized and extendable. At the same time, the data space is a cryptographically secure, interoperable, and largely automatable dataspace that is free of both tedious manual maintenance and unnecessary redundancy.

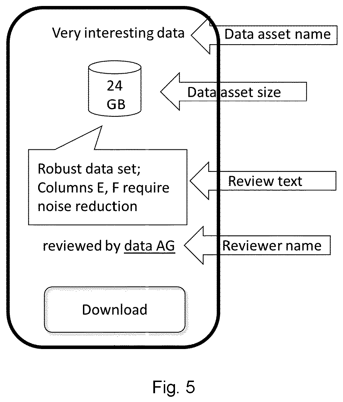

In another embodiment, a data provider (that is, an owner of a newly published data asset) is enabled to ask one or more other data providers if they want to review a newly published data asset, e.g., by pressing a button in its data provider client 210. The reviewer (that is, the one or more other data providers) can then form a judgment about the newly published data asset and then enter the judgment/review (such as rating) into its data provider client 210. An example is shown in figure 5. As shown in figure 5, a data provider client 210 of the reviewer is capable of presenting information about data asset such as data asset size, data asset name. The data provider client 210 of the reviewer also enables the reviewer to input review text (e.g. "Robust data set; Columns E, F require noise reduction") for the data asset.

In doing so, a data provider client 210 of the owner is configured to send a review request to a data provider client 210 of a reviewer, the review request comprising a VC used to identify an ownership of a data asset.

The data provider client 210 of the reviewer is configured to obtain the review request, verify the ownership of the data asset based on the VC in the review request. After successfully verifying the ownership of the data asset, the data provider client 210 of the reviewer is configured to download the data asset, obtaining review text for the data asset, issue/generate a VC indicating a quality of data asset (herein after quality VC) to the data asset based on the review text for the data asset, and send the quality VC of the data asset to the data provider client 210 of the owner. In some examples, the quality VC can be signed with a private key of the reviewer, so that the quality VC is cryptographically verifiable via a public key of the reviewer. Optionally, the quality VC of the data asset comprises a personal identity of the reviewer (e.g., an institution/organization name) or an indication on whether the reviewer is a registered data provider.

While some embodiments have been described in detail it is to be understood that aspects of the disclosure can take many forms. In particular, the claimed subject matter may be practiced or implemented differently from the examples described and the described features and characteristics may be practiced or implemented in any combination. The embodiments shown herein are intended to illustrate rather than to limit the invention as defined by the claims.

## Claims

1. A system for managing open data for a data space, comprising:
one or more computer-implemented data provider clients (210);
one or more computer-implemented data consumer clients (220);
a registry including multiple registry nodes (230);
wherein each data provider client is used for a data provider, and is configured to register a decentralized identifier, DID, of the data provider and an DID document of the data provider in the registry, the DID document of each data provider comprises a public key of the data provider and a service endpoint for retrieving metadata of a data asset of the data provider;
wherein the registry is a decentralized registry with multiple registry nodes,
wherein each registry node contains the whole registry information of the registry implemented by a blockchain based system;
wherein each data consumer client comprises a metadata crawler configured to obtain or update a list of DIDs and DID documents of all data providers which are registered in the registry, and
build or update a local catalogue, wherein the local catalogue comprises one or more of the following information: a database comprising all available metadata of all data assets of all data providers, a category tree of all data assets of all data providers, an inverted index based on keyword, and filtered metadata which is filtered from all available metadata of all data assets of all data providers according to a requirement of a data consumer;
wherein the system further comprises:
a governance authority configured to onboard trustworthy data providers and/or data consumers, to issue cryptographically verifiable role credentials as verifiable credentials (VCs), and to publish a governance framework defining terms, conditions, admissible protocols, algorithms, credential types, and metadata standards for use within the data space;

2. The system for managing data according to claim 1, wherein the DID document of the data provider comprises one or more of the following service endpoints: a service endpoint for downloading all available metadata of all data assets of the data provider, a service endpoint for downloading filtered metadata of all data assets of the data provider, a service endpoint for data asset consumption, a service endpoint for obtaining information about the data provider.

3. The system for managing data according to claim 1 or 2, wherein the metadata crawler of each data consumer client is configured to update a list of DIDs of all data providers which are registered in the registry by checking a DID document of a data space, wherein the DID document of the data space includes a service endpoint linked to a machine-readable website which contains the list of DIDs of all data providers registered in the registry.

4. The system for managing data according to any one of claims 1 to 3, wherein at least one data provider client in the one or more data provider clients is configured to generate a service endpoint for obtaining metadata of a new data asset of a data provider, and add the service endpoint for obtaining the metadata of the new data asset into the DID document of the data provider, whereby the metadata crawler of at least one data consumer client in the one or more data consumer clients is configured to discover the change of the DID document of the data provider, and update its local catalogue based on the service endpoint for obtaining the metadata of the new data asset.

5. The system for managing data according to claim 4, wherein the at least one data provider client in the one or more data provider clients is further configured to add the metadata of the new data asset to its local catalogue or add data in the new data asset to its local catalogue;
wherein the local catalogue of the at least one data provider client in the one or more data provider clients comprises one or more of the following information: a database comprising all available metadata of all data assets of the data provider, a category tree of all data assets of the data provider, an inverted index based on keyword, and filtered metadata which is filtered from all available metadata of all data assets of the data provider.

6. The system for managing data according to any one of claims 1 to 5, wherein at least one data provider client in the one or more data provider clients is configured to generate a DID and a DID document for a new data asset, and register the DID of the new data asset and/or the DID document of the new data asset to the registry, wherein the DID document of the new data asset comprises a service endpoint for obtaining metadata of the new data asset, whereby the at least one data provider client in the one or more data provider clients is further configured to send a notification comprising the DID of the new data asset to at least one data consumer client in the one or more data consumer clients.

7. The system for managing data according to claim 6, the at least one data consumer client in the one or more data consumer clients is configured to receive a notification comprising the DID of the new data asset, obtain the DID document of the new data asset based on the DID of the new data asset and obtain the metadata of the new data asset based on the DID document of the new data asset, whereby the at least one data consumer client in the one or more data consumer clients is further configured to update its local catalogue based on the metadata of the data asset.

8. The system for managing data according to any one of claims 1 to 7, at least one data provider client in the one or more data provider clients is configured to retract one or more data assets of a data provider by removing a service endpoint for obtaining metadata of the one or more data assets from the DID document of the data provider.

9. The system for managing data according to any one of claims 1 to 8, at least one data provider client in the one or more data provider clients is configured to retract one or more data asset of a data provider by revocing all DIDs of the one or more data assets in the registry and/or by revocing all DID documents of the one or more data assets in the registry.

10. The system for managing data according to any one of claims 1 to 9, wherein at least one data provider client in the one or more data provider clients comprises a metadata crawler which is the same as the metadata crawler of each data consumer client.

11. The system for managing data according to any one of claims 1 to 10, wherein some or all of the one or more data provider clients are configured to host some or all of the multiple registry nodes.

12. The system for managing data according to any one of claims 1 to 11, wherein each data consumer client is configured to register a DID of a data consumer and a DID document of a data consumer in the registry, the DID document of the data consumer comprises a public key of the data consumer.

13. The system for managing data according to claim 12, wherein the registry is configured to store the registered DID of the data consumer and/or the registered DID document of the data consumer.

## Patentansprüche

1. System zum Verwalten offener Daten für einen Datenraum, umfassend:
einen oder mehrere computerimplementierte Datenanbieter-Clients (210);
einen oder mehrere computerimplementierte Datenverbraucher-Clients (220);
eine Registry mit mehreren Registry-Knoten (230);
wobei jeder Datenanbieter-Client für einen Datenanbieter verwendet wird und dazu eingerichtet ist, einen dezentralen Identifikator, DID, des Datenanbieters und ein DID-Dokument des Datenanbieters in der Registry zu registrieren, wobei das DID-Dokument jedes Datenanbieters einen öffentlichen Schlüssel des Datenanbieters und einen Service-Endpunkt zum Abrufen von Metadaten eines Datenassets des Datenanbieters umfasst;
wobei die Registry eine dezentrale Registry mit mehreren Registry-Knoten ist, wobei jeder Registry-Knoten die gesamten Registry-Informationen der Registry enthält, die durch ein Blockchain-basiertes System implementiert ist;
wobei jeder Datenverbraucher-Client einen Metadata-Crawler umfasst, der dazu eingerichtet ist, eine Liste von DIDs und DID-Dokumenten aller Datenanbieter, die in der Registry registriert sind, zu beziehen oder zu aktualisieren, und
einen lokalen Katalog zu erstellen oder zu aktualisieren, wobei der lokale Katalog eine oder mehrere der folgenden Informationen umfasst: eine Datenbank umfassend alle verfügbaren Metadaten aller Datenassets aller Datenanbieter, einen Kategoriebaum aller Datenassets aller Datenanbieter, einen invertierten Index basierend auf Schlüsselwörtern, und gefilterte Metadaten, die aus allen verfügbaren Metadaten aller Datenassets aller Datenanbieter entsprechend einer Anforderung eines Datenverbrauchers herausgefiltert sind;
wobei das System ferner umfasst:
eine Governance Authority, die dazu eingerichtet ist, vertrauenswürdige Datenanbieter und/oder Datenverbraucher zu onboarden, kryptographisch verifizierbare Rollen-Credentials als Verifiable Credentials (VCs) auszustellen und ein Governance Framework zu veröffentlichen, das Bedingungen, Konditionen, zulässige Protokolle, Algorithmen, Credential-Typen und Metadaten-Standards für die Verwendung innerhalb des Datenraums definiert;

2. System zum Verwalten von Daten nach Anspruch 1, wobei das DID-Dokument des Datenanbieters einen oder mehrere der folgenden Service-Endpunkte umfasst: einen Service-Endpunkt zum Herunterladen aller verfügbaren Metadaten aller Datenassets des Datenanbieters, einen Service-Endpoint zum Herunterladen gefilterter Metadaten aller Datenassets des Datenanbieters, einen Service-Endpunkt für Datenasset-Verbrauch, einen Service-Endpunkt zum Beziehen von Informationen über den Datenanbieter.

3. System zum Verwalten von Daten nach Anspruch 1 oder 2, wobei der Metadata-Crawler jedes Datenverbraucher-Clients dazu eingerichtet ist, eine Liste von DIDs aller Datenanbieter, die in der Registry registriert sind, zu aktualisieren, indem ein DID-Dokument eines Datenraums überprüft wird, wobei das DID-Dokument des Datenraums einen Service-Endpunkt umfasst, der mit einer maschinenlesbaren Website verknüpft ist, welche die Liste von DIDs aller in der Registry registrierten Datenanbieter enthält.

4. System zum Verwalten von Daten nach einem der Ansprüche 1 bis 3, wobei mindestens ein Datenanbieter-Client unter dem einen oder den mehreren Datenanbieter-Clients dazu eingerichtet ist, einen Service-Endpunkt zum Beziehen von Metadaten eines neuen Datenassets eines Datenanbieters zu erzeugen und den Service-Endpunkt zum Beziehen der Metadaten des neuen Datenassets in das DID-Dokument des Datenanbieters hinzuzufügen, wodurch der Metadata-Crawler mindestens eines Datenverbraucher-Clients unter dem einen oder den mehreren Datenverbraucher-Clients dazu eingerichtet ist, die Änderung des DID-Dokuments des Datenanbieters zu entdecken und seinen lokalen Katalog basierend auf dem Service-Endpunkt zum Beziehen der Metadaten des neuen Datenassets zu aktualisieren.

5. System zum Verwalten von Daten nach Anspruch 4, wobei der mindestens eine Datenanbieter-Client unter dem einen oder den mehreren Datenanbieter-Clients ferner dazu eingerichtet ist, die Metadaten des neuen Datenassets zu seinem lokalen Katalog hinzuzufügen oder Daten in dem neuen Datenasset zu seinem lokalen Katalog hinzuzufügen;
wobei der lokale Katalog des mindestens einen Datenanbieter-Clients unter dem einen oder den mehreren Datenanbieter-Clients eine oder mehrere der folgenden Informationen umfasst: eine Datenbank umfassend alle verfügbaren Metadaten aller Datenassets des Datenanbieters, einen Kategoriebaum aller Datenassets des Datenanbieters, einen invertierten Index basierend auf Schlüsselwörtern, und gefilterte Metadaten, die aus allen verfügbaren Metadaten aller Datenassets des Datenanbieters herausgefiltert sind.

6. System zum Verwalten von Daten nach einem der Ansprüche 1 bis 5, wobei mindestens ein Datenanbieter-Client unter dem einen oder den mehreren Datenanbieter-Clients dazu eingerichtet ist, einen DID und ein DID-Dokument für ein neues Datenasset zu erzeugen und den DID des neuen Datenassets und/oder das DID-Dokument des neuen Datenassets in der Registry zu registrieren, wobei das DID-Dokument des neuen Datenassets einen Service-Endpunkt zum Beziehen von Metadaten des neuen Datenassets umfasst, wodurch der mindestens eine Datenanbieter-Client unter dem einen oder den mehreren Datenanbieter-Clients ferner dazu eingerichtet ist, eine Benachrichtigung mit dem DID des neuen Datenassets an mindestens einen Datenverbraucher-Client unter dem einen oder den mehreren Datenverbraucher-Clients zu senden.

7. System zum Verwalten von Daten nach Anspruch 6, wobei der mindestens eine Datenverbraucher-Client unter dem einem oder den mehreren Datenverbraucher-Clients dazu eingerichtet ist, eine Benachrichtigung mit dem DID des neuen Datenassets zu empfangen, basierend auf dem DID des neuen Datenassets das DID-Dokument des neuen Datenassets zu beziehen und basierend auf dem DID-Dokument des neuen Datenassets die Metadaten des neuen Datenassets zu beziehen, wodurch der mindestens eine Datenverbraucher-Client unter dem einen oder den mehreren Datenverbraucher-Clients ferner dazu eingerichtet ist, seinen lokalen Katalog basierend auf den Metadaten des Datenassets zu aktualisieren.

8. System zum Verwalten von Daten nach einem der Ansprüche 1 bis 7, wobei mindestens ein Datenanbieter-Client unter dem einem oder den mehreren Datenanbieter-Clients dazu eingerichtet ist, ein oder mehrere Datenassets eines Datenanbieters zurückzuziehen indem ein Service-Endpunkt zum Beziehen von Metadaten des einen oder der mehreren Datenassets aus dem DID-Dokument des Datenanbieters entfernt wird.

9. System zum Verwalten von Daten nach einem der Ansprüche 1 bis 8, wobei mindestens ein Datenanbieter-Client unter dem einen oder den mehreren Datenanbieter-Clients dazu eingerichtet ist, ein oder mehrere Datenassets eines Datenanbieters zurückzuziehen, indem alle DIDs des einen oder der mehreren Datenassets in der Registry widerrufen werden und/oder indem alle DID-Dokumente des einen oder der mehreren Datenassets in der Registry widerrufen werden.

10. System zum Verwalten von Daten nach einem der Ansprüche 1 bis 9, wobei mindestens ein Datenanbieter-Client unter dem einem oder den mehreren Datenanbieter-Clients einen Metadata-Crawler umfasst, welcher der gleiche ist wie der Metadata-Crawler jedes Datenverbraucher-Clients.

11. System zum Verwalten von Daten nach einem der Ansprüche 1 bis 10, wobei einige oder alle unter dem einen oder den mehreren Datenanbieter-Clients dazu eingerichtet sind, einige oder alle unter den mehreren Registry-Knoten zu hosten.

12. System zum Verwalten von Daten nach einem der Ansprüche 1 bis 11, wobei jeder Datenverbraucher-Client dazu eingerichtet ist, einen DID eines Datenverbrauchers und ein DID-Dokument eines Datenverbrauchers in der Registry zu registrieren, wobei das DID-Dokument des Datenverbrauchers einen öffentlichen Schlüssel des Datenverbrauchers umfasst.

13. System zum Verwalten von Daten nach Anspruch 12, wobei die Registry dazu eingerichtet ist, den registrierten DID des Datenverbrauchers und/oder das registrierte DID-Dokument des Datenverbrauchers zu speichern.

## Revendications

1. Système de gestion de données ouvertes pour un espace de données, comprenant :
un ou plusieurs clients fournisseurs de données informatisés (210) ;
un ou plusieurs clients consommateurs de données informatisés (220) ;
un registre comprenant plusieurs nœuds de registre (230) ;
dans lequel chaque client fournisseur de données est utilisé pour un fournisseur de données et configuré pour enregistrer un identifiant décentralisé (DID) du fournisseur de données et un document DID du fournisseur de données dans le registre, le document DID de chaque fournisseur de données comprend une clé publique du fournisseur de données et un point de terminaison de service pour récupérer les métadonnées d'un actif de données du fournisseur de données ;
dans lequel le registre est un registre décentralisé composé de plusieurs nœuds de registre, dans lequel chaque nœud de registre contient l'intégralité des informations du registre, implémenté par un système basé sur la blockchain ;
dans lequel chaque client consommateur de données comprend un robot d'exploration de métadonnées configuré pour obtenir ou mettre à jour la liste des DID et des documents DID de tous les fournisseurs de données qui sont enregistrés dans le registre et
pour créer ou mettre à jour un catalogue local, dans lequel le catalogue local comprend une ou plusieurs des informations suivantes : une base de données contenant toutes les métadonnées disponibles de tous les actifs de données de tous les fournisseurs de données, une arborescence de catégorie de tous les actifs de données de tous les fournisseurs de données, un index inversé basé sur des mots-clés et des métadonnées filtrées, qui sont filtrés parmi toutes les métadonnées disponibles de tous les actifs de données de tous les fournisseurs de données, selon un besoin d'un consommateur de données, dans lequel le système comprend en outre : une autorité de gouvernance configurée pour intégrer des fournisseurs de données et/ou des consommateurs de données de confiance, délivrer des justificatifs de rôle cryptographiquement vérifiables en tant qu'identifiants vérifiables (VC) et publier un cadre de gouvernance définissant les termes, conditions, protocoles admissibles, algorithmes, types de justificatifs et normes de métadonnées à utiliser dans l'espace de données.

2. Système de gestion de données selon la revendication 1, dans lequel le document DID du fournisseur de données comprend un ou plusieurs des points de terminaison de service suivants : un point de terminaison de service pour télécharger toutes les métadonnées disponibles de tous les actifs de données du fournisseur de données, un point de terminaison de service pour télécharger les métadonnées filtrées de tous les actifs de données du fournisseur de données, un point de terminaison de service pour la consommation des actifs de données et un point de terminaison de service pour obtenir des informations sur le fournisseur de données.

3. Système de gestion de données selon la revendication 1 ou 2, dans lequel le robot d'exploration de métadonnées de chaque client consommateur de données est configuré pour mettre à jour une liste des DID de tous les fournisseurs de données qui sont enregistrés dans le registre en vérifiant un document DID d'un espace de données, dans lequel le document DID de l'espace de données comprend un point de terminaison de service lié à un site web lisible par machine contenant la liste des DID de tous les fournisseurs de données enregistrés dans le registre.

4. Système de gestion de données selon une quelconque des revendications 1 à 3, dans lequel au moins un client fournisseur de données parmi le ou les clients fournisseurs de données est configuré pour générer un point de terminaison de service permettant d'obtenir les métadonnées d'un nouvel actif de données d'un fournisseur de données et ajouter le point de terminaison de service pour obtenir les métadonnées du nouvel actif de données au document DID du fournisseur de données, moyennant quoi le robot d'exploration de métadonnées d'au moins un client consommateur de données parmi les clients consommateurs de données est configuré pour détecter la modification du document DID du fournisseur de données et mettre à jour son catalogue local sur la base du point de terminaison de service permettant d'obtenir les métadonnées du nouvel actif de données.

5. Système de gestion de données selon la revendication 4, dans lequel au moins un client fournisseur de données parmi le ou les clients fournisseurs de données est en outre configuré pour ajouter les métadonnées du nouvel actif de données à son catalogue local ou ajouter les données dans le nouvel actif de données à son catalogue local ;
dans lequel le catalogue local d'au moins un client fournisseur de données comprend une ou plusieurs des informations suivantes : une base de données comprenant toutes les métadonnées disponibles de tous les actifs de données du fournisseur de données, une arborescence de catégorie de tous les actifs de données du fournisseur de données, un index inversé basé sur un mot-clé et des métadonnées filtrées qui sont filtrées à partir de toutes les métadonnées disponibles de tous les actifs de données du fournisseur de données.

6. Système de gestion de données selon une quelconque des revendications 1 à 5, dans lequel au moins un client fournisseur de données parmi le ou les clients fournisseurs de données est configuré pour générer un DID et un document DID pour un nouvel actif de données et enregistrer le DID du nouvel actif de données et/ou le document DID du nouvel actif de données dans le registre, dans lequel le document DID du nouvel actif de données comprend un point de terminaison de service pour obtenir les métadonnées du nouvel actif de données, moyennant quoi le au moins un client fournisseur de données parmi les clients fournisseurs de données est en outre configurés pour envoyer une notification comprenant le DID du nouvel actif de données à au moins un client consommateur de données parmi les clients consommateurs de données.

7. Système de gestion de données selon la revendication 6, le au moins un client consommateur de données est configuré pour recevoir une notification comprenant le DID du nouvel actif de données, obtenir le document DID du nouvel actif de données sur la base du DID du nouvel actif de données et obtenir les métadonnées du nouvel actif de données sur la base du document DID du nouvel actif de données, moyennant quoi le au moins un client consommateur de données est en outre configuré pour mettre à jour son catalogue local sur la base des métadonnées de l'actif de données.

8. Système de gestion de données selon une quelconque des revendications 1 à 7, au moins un client fournisseur de données dans le ou les clients fournisseurs de données est configuré pour retirer un ou plusieurs actifs de données d'un fournisseur de données en supprimant un point de terminaison de service pour obtenir les métadonnées du ou des actifs de données du document DID du fournisseur de données.

9. Système de gestion de données selon une quelconque des revendications 1 à 8, dans lequel au moins un client fournisseur de données parmi le ou les clients fournisseurs de données est configuré pour retirer un ou plusieurs actifs de données d'un fournisseur de données en révoquant tous les DID de ces actifs de données dans le registre et/ou en révoquant tous les documents DID de ces actifs de données dans le registre.

10. Système de gestion de données selon une quelconque des revendications 1 à 9, dans lequel au moins un client fournisseur de données parmi le ou les clients fournisseurs de données comprend un robot d'exploration de métadonnées qui est identique au robot d'exploration de métadonnées de chaque client consommateur de données.

11. Système de gestion de données selon une quelconque des revendications 1 à 10, dans lequel certains ou tous du ou des clients fournisseurs de données sont configurés pour héberger certains ou tous des nœuds de registre.

12. Système de gestion de données selon une quelconque des revendications 1 à 11, dans lequel chaque client consommateur de données est configuré pour enregistrer un DID d'un consommateur de données et un document DID d'un consommateur de données dans le registre, le document DID du consommateur de données comprenant une clé publique du consommateur de données.

13. Système de gestion de données selon la revendication 12, dans lequel le registre est configuré pour stocker le DID enregistré du consommateur de données et/ou le document DID enregistré du consommateur de données.
